# EUROPÄISCHE PATENTSCHRIFT

(11) **EP 4 200 734 B1**
(45) Veröffentlichungstag und Bekanntmachung des Hinweises auf die Patenterteilung: **01.01.2025**
(21) Anmeldenummer: 21786841.3
(22) Anmeldetag: 30.09.2021
(51) Int. Cl.: G06F 21/57, H04L 9/40

(54) **VERFAHREN ZUM BETREIBEN EINES NETZWERKS UND COMPUTERPROGRAMMPRODUKT**
METHOD FOR OPERATING A NETWORK, AND COMPUTER PROGRAM PRODUCT
PROCÉDÉ DE COMMANDE D'UN RÉSEAU ET PRODUIT PROGRAMME D'ORDINATEUR

(30) Priorität: 30.09.2020 DE 102020212405
(43) Veröffentlichungstag der Anmeldung: 28.06.2023
(73) Patentinhaber: Siemens Aktiengesellschaft, 80333 München (DE)
(72) Erfinder: HOLST, Florian, 81379 München (DE); WALTER, Marcel, 96047 Bamberg (DE)
(74) Vertreter: Siemens Patent Attorneys
(86) Internationale Anmeldenummer: PCT/EP2021/076985
(87) Internationale Veröffentlichungsnummer: WO 2022/069657

(56) Entgegenhaltungen:
- US-A1- 2007 143 851
- US-A1- 2014 046 645
- US-A1- 2016 373 478
- US-B1- 8 874 685
- US-B1- 9 762 582

## Beschreibung

Die Erfindung betrifft ein Verfahren zum Betreiben eines Netzwerks mit mindestens einem Endpunkt mit mindestens einer Netzwerkressource oder administrierend mindestens eine Netzwerkressource sowie ein Computerprogrammprodukt.

Netzwerke in Unternehmen und Fertigungsstätten sind regelmäßig zahlreichen Angriffen von Dritten ausgesetzt. Somit komm der Gewährleistung der IT-Sicherheit eine hohe Bedeutung zu. Es sind aus dem Stand der Technik die Dokumente US 8 874 685 B1, US 9 762 582 B1, US 2007/143851 A1, US 2016/373478 A1 und US 2014/046645 A1 bekannt.

Es ist daher Aufgabe der Erfindung, ein Verfahren zum Betreiben eines Netzwerks zu schaffen, welches sicher ausgeführt werden kann und welches eine Option zur Automatisierung aufweist.

Das erfindungsgemäße Verfahren ist ein Verfahren nach Anspruch 1 zum Betreiben eines Netzwerks mit mindestens einem Endpunkt mit mindestens einer Netzwerkressource oder administrierend mindestens eine Netzwerkressource. Das erfindungsgemäße Verfahren weist die folgenden Schritte auf:
- Festlegen eines Regelsatzes mit mindestens einer Regel für den zumindest einen Endpunkt,
- Beobachten einer Compliance des zumindest einen Endpunkts mit dem Regelsatz,
- Zuweisen eines Scores abhängig von der Compliance und
- Bestimmung mindestens einer Maßnahme abhängig von dem Score.

Idealerweise ist das Verfahren gemäß der Erfindung ein computer-implementiertes Verfahren.

Mittels des erfindungsgemäßen Verfahrens lässt sich das Netzwerk vorteilhaft gemäß IT-Sicherheitsanforderungen betreiben. Zweckmäßig umfasst der Regelsatz Regeln zur IT-Sicherheit, sodass mittels des erfindungsgemäßen Verfahrens eine Sicherung von Netzwerken, etwa in Unternehmen oder Fertigungsstätten leicht erfolgen kann.

Vorzugsweise umfasst bei dem erfindungsgemäßen Verfahren die mindestens eine Maßnahme ein Begrenzen von Privilegien des Endpunkts im Netzwerk abhängig von dem Score. So kann etwa eine Administration der Netzwerkressource auf eine weniger sicherheitskritische Untermenge von Privilegien beschränkt werden.

Bevorzugt umfasst bei Verfahren gemäß der Erfindung die mindestens eine Maßnahme einen Abbruch des Betreibens des Netzwerks. Im extremen Fall, dass ein weiterer Betrieb des Netzwerks nicht verantwortbar wäre, kann ein Abbruch des Betreibens des Netzwerks in Erwägung gezogen werden.

Bei dem Verfahren gemäß der Erfindung wird der mindestens eine Endpunkt vorzugsweise mit je mindestens einer Netzwerkressource und/oder mindestens einer Administrator-Hardware, vorzugsweise ein Client-Rechner und/oder eine Authentifizierungs-Hardware, und/oder mindestens einer Hardware-Schnittstelle, vorzugsweise einem User-Account, gebildet. Vorteilhaft kann der Client-Rechner oder die Authentifizierungshardware, etwa eine elektronisch lesbare Firmenausweiskarte, an einen Administrator-Konto gekoppelt sein, sodass sich lediglich ein einziger Administrator mit dem Endpunkt verbinden kann.

In einer vorteilhaften Weiterbildung des erfindungsgemäßen Verfahrens wird die mindestens eine Netzwerkressource mit einer Hardware, insbesondere einem Server, und/oder mit einer Software, insbesondere einem Betriebssystem und/oder einem Anwendungsprogramm zur Anwendung mittels des Netzwerks, gebildet.

In einer vorteilhaften Weiterbildung des erfindungsgemäßen Verfahrens bildet der Endpunkt eine Administratorschnittstelle.

Bevorzugt legt bei dem Verfahren gemäß der Erfindung der Regelsatz die Regelmäßigkeit eines Updates der Software und/oder einer Software auf der Hardware fest.

In einer vorteilhaften Weiterbildung des erfindungsgemäßen Verfahrens umfasst die Maßnahme eine Begrenzung von administrativen Privilegien und/oder eine Änderung der Anbindung des Endpunkts an das Netzwerk, etwa eine Trennung des Endpunkts vom Netzwerk, und/oder eine Schulung für einen sich mit dem Endpunkt verbindenden Administratort.

Zweckmäßig wird im letztgenannten Fall der vorgenannten Weiterbildung der Score in mindestens zwei Kategorien zugewiesen und die Schulung, vorzugsweise mittels Modulen, abhängig von dem Score in den Kategorien, angepasst, vorzugsweise abhängig von der Besetzung der Kategorien und/oder dem absoluten und/oder relativen Gewicht der Kategorien.

Geeigneterweise wird in einer Weiterbildung der Erfindung ein Administrator zum Netzwerk erst nach einer Schulung zugelassen.

Vorzugsweise wird bei dem erfindungsgemäßen Verfahren der Score abhängig von einer, vorzugsweise wiederholten, Schulung und/oder einer, vorzugsweise wiederholten, Überprüfung vergeben oder aufrechterhalten.

Das erfindungsgemäße Computerprogrammprodukt nach Anspruch 11 ist zur Anwendung in dem erfindungsgemäßen Verfahren wie zuvor beschrieben ausgebildet. Das Computerprogrammprodukt gemäß der Erfindung ist ausgebildet zur Speicherung eines Regelsatzes mit mindestens einer Regel für den zumindest einen Endpunkt, zur Entgegennahme von Beobachtungsdaten zur Compliance des zumindest einen Endpunkts mit dem Regelsatz sowie zur Zuweisung eines Scores abhängig von der Compliance.

Nachfolgend wird die Erfindung anhand eines in der Zeichnung dargestellten Ausführungsbeispiels näher erläutert. Die einzige Zeichnungsfigur 1 zeigt ein Unternehmens-Netzwerk mit Netzwerk-Ressourcen, welche mittels des Unternehmens-Netzwerks administriert werden, schematisch im Querschnitt.

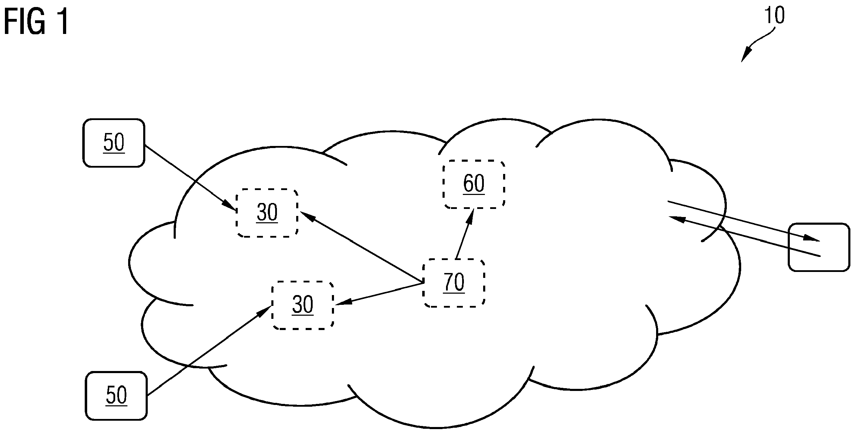

Das in Fig. 1 gezeigte Netzwerk 10 ist ein Unternehmens-Netzwerk und weist miteinander verbundene Computer auf. Einige der Computer des Netzwerks 10 bilden verteilte Server 30 für Netzwerk-Ressourcen. Weitere der Computer des Netzwerks 10 sind als Client-Rechner 50 zur Administration der Server 30 realisiert. Sowohl die Server 30 als auch die Client-Rechner 50 bilden Endpunkte des Netzwerks 10, welche entweder als Server 30 Inhalte oder Dienstleistungen ins Netzwerk 10 einspeisen oder als Client-Rechner 50 für administrative Aufgaben eine Schnittstelle zu einem Administrator bereitstellen. Im dargestellten Ausführungsbeispiel ist das Netzwerk 10 als Cloud-Netzwerk ausgebildet. In diesem Cloud-Netzwerk liegen die Server 30 nicht als separate, voneinander hinsichtlich ihrer jeweiligen Hardware isolierte, Rechner vor, sondern die Server 30 liegen jeweils als logische Server 30 im Sinne einer auf einer Vielzahl von Rechnern des Netzwerks 10 gespeicherten verteilten Datenbank vor. In weiteren, nicht eigens dargestellten Ausführungsbeispielen kann das Netzwerk 10 auch als sonstiges, konventionelles, etwa hierarchisches Netzwerk 10 ausgebildet sein, in welchem die Server 30 als separate, physisch getrennte Hardware-Server vorliegen.

Die Server 30 sind konfiguriert, um eine Projekt-Koordinations-Software mittels des Netzwerks 10 zu betreiben. Mittels der Projekt-Koordinations-Software können Nutzer Projekt-Meilensteine ins System einspeisen und miteinander hinsichtlich ihrer Erreichung abstimmen, sodass ein Nutzer einen raschen Überblick über einen Projektstatus sowie über die Erfüllung seiner Verbindlichkeiten hinsichtlich der Projekt-Meilensteine erhält.

Das Netzwerk enthält zusätzlich einen zentralen Rechte-Management-Server 60, welcher Zugangsrechte zu den Netzwerkressourcen gewährt oder verweigert.

Das Netzwerk 10 weist zudem eine Beobachtungseinheit 70 auf, welche den Sicherheitszustand des Netzwerks 10 beobachtet. Die Beobachtungseinheit 70 prüft in regelmäßigen Abständen oder kontinuierlich einen Update-Zustand der Betriebssysteme der Server 30, beispielsweise den Update-Zustand von Linux-Systemen der Server 30. Dabei vergleicht die Beobachtungseinheit 70 die Aktualität des jeweiligen Betriebssystems mit einer Soll-Aktualität des Betriebssystems, welche etwa einer Empfehlung eines Repository-Maintainers einer Distribution des Linux-Systems entspricht. Wurden beispielsweise aktuelle Patches des Linux-Systems nicht eingespielt, so wird abhängig von dem Zeitraum, über welchen trotz einer möglichen Aktualisierung keine Aktualisierung des Linux-Systems erfolgte, sowie abhängig von der Anzahl und der Sicherheitskritikalität der Patches, welche etwa aus einer Einstufung seitens der Entwickler oder von Repository-Maintainern abgeleitet wird, ein Score berechnet, welcher dem jeweiligen Server 30 zugeordnet wird. Beispielsweise enthält der Score eine Summe aus einer zum oben genannten Zeitraum proportionalen Größe (beispielsweise eine Angabe des Zeitraums in Stunden mit einem Proportionalitätsfaktor) sowie einer Größe, welche ein Maß (z.B. eine Wertzahl von "5" für "hochkritisch", eine Wertzahl von "3" für "kritisch" und eine Wertzahl von "1" für "empfohlen") für die Sicherheitskritikalität jedes trotz Verfügbarkeit versäumten Patches aufsummiert. Auf diese Weise ist jedem Server 30 ein Score für die Sicherheit des Betriebssystems zugeordnet, welcher umso höher ausfällt, umso mehr oder schwerwiegendere Sicherheitslücken der jeweilige Server 30 aufweist.

Eine gleichartiger Score wird auch der Projekt-Koordinations-Software abhängig von für diese verfügbaren Patches oder Updates zugeordnet.

Die Summe des Scores für die Projekt-Koordinations-Software sowie des Scores für das Betriebssystem bildet einen Gesamtscore für den Server 30, welcher dem Server 30 als Zertifikat zugeordnet wird. Überschreitet der Gesamtscore einen ersten kritischen Schwellwert, so wird dieser Gesamtscore oder eine Information über das Überschreitens dieses ersten Schwellwerts dem Rechte-Management-Server 60 übermittelt, welcher aufgrund des Überschreitens des ersten Schwellwerts eine Maßnahme zur Erhöhung der Sicherheit des Netzwerks 10 einleitet. Die Maßnahme kann etwa einen eingeschränkten Betrieb des Servers 30 in einem Notfallmodus oder - bei einem signifikanten Überschreiten des Schwellwerts, etwa um einen Faktor von 50 Prozent - ein Abschalten des Servers 30 oder des Netzwerks 10 bedeuten.

Zusätzlich wird ein solcher Gesamtscore nicht allein dem Server 30 zugeordnet. Vielmehr wird ein Gesamtscore auch dem jeweiligen Administrator (in der Zeichnung nicht explizit dargestellt) zugeordnet, welcher für die Aktualisierung des Servers 30 und der Projekt-Koordinations-Software verantwortlich ist. Diese Zuordnung erfolgt dabei entweder zu einem Client-Rechner 50 des jeweiligen Administrators oder im Falle eines möglichen Wechsels von Client-Rechnern 50 des jeweiligen Administrators zu einem Administrator-Konto zum privilegierten Zugang des Administrators zum Netzwerk 10.

Die Zuordnung eines Gesamtscores zum Server 30 sowie die Zurechnung eines Score-Wertes zu dem Administrator-Konto erfolgt im gezeigten Ausführungsbeispiel mittels jeweils eines Score-Kontos, welches dem Server 30 und dem Administrator-Konto eindeutig zugeordnet ist. Die Score-Konten der Server 30 und der Administratoren werden auf dem Rechte-Management-Server 60 bereitgehalten.

Im dargestellten Ausführungsbeispiel erfolgt die Zuordnung zu einem Administrator-Konto, welches im gezeigten Ausführungsbeispiel eindeutig einem konkreten Administrator zugeordnet ist. Dabei werden dem Administrator-Konto lediglich diejenigen Score-Werte zugerechnet, welche auf Software entfallen, die in der Verantwortung des Administrators des Administrator-Kontos steht, d.h. zu welchen der Administrator des Administrator-Kontos tatsächlich Aktualisierungsaufgaben übernimmt.

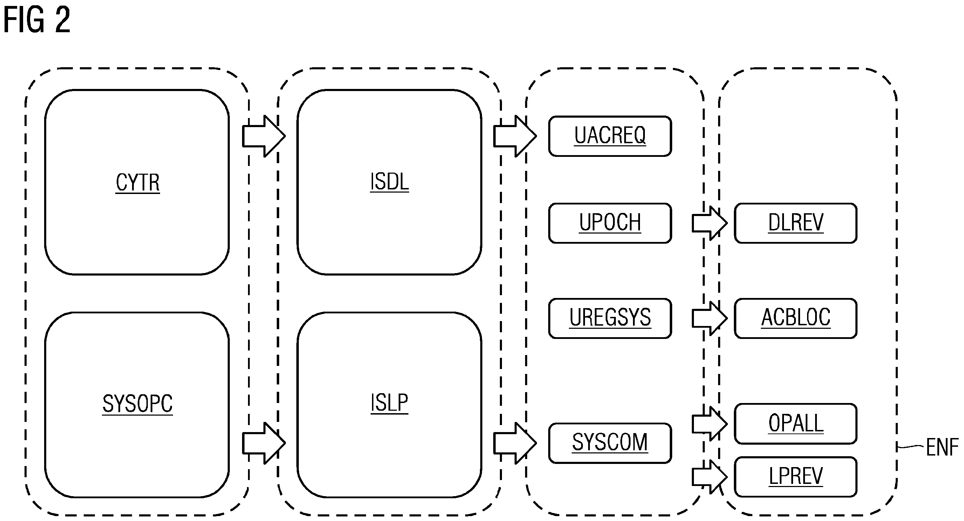

### Die Rechteverwaltung ist in Fig. 2 skizziert:

Um überhaupt für eine Administrator-Rolle für einen Server 30 des Netzwerks 10 zugelassen zu werden, muss ein Administrator ein Cybersecurity-Training CYTR absolvieren, welches über einen für das Netzwerk 10 verbindlichen Administratorregelsatz von sicherheitsrelevanten Regeln informiert. Die sicherheitsrelevanten Regeln umfassen unter anderem die Erfordernisse einer zeitnahen und möglichst vollständigen Einspielung von Patches. Absolviert der Administrator das Cybersecurity-Training CYTR, so wird dem Administrator ein Administratorzertifikat ISDL verliehen. Aufgrund des Administratorzertifikats ISDL wird dem Administrator-Konto eine kryptographische Signatur als Administratorsignatur hinzufügt, die ihn als Administrator des Servers 30 berechtigt.

Gleichzeitig muss auch der Server 30 selbst Sicherheitsanforderungen genügen, welche zusammengefasst sind in einer System-Sollkonfiguration SYSOPC, welche eine Aktualität sämtlicher auf dem Server 30 installierter Software bedeutet, hier des Betriebssystems sowie der Projekt-Koordinations-Software. Nach einer Prüfung auf eine der System-Sollkonfiguration SYSOPC genügende Konfiguration des Servers 30 wird dem Server 30 eine Serverzulassung ISLP zum Netzwerk 10 zuerkannt. Aufgrund der Serverzulassung ISLP zum Netzwerk 10 wird dem Server 30 eine weitere kryptographische Signatur in Gestalt einer Serversignatur verliehen, welche den Server 30 als zumindest anfänglich der System-Sollkonfiguration SYSOPC genügend ausweist. Mittels der Serversignatur wird der Server 30 zur Einbindung in das Netzwerk 10 zugelassen.

### Eine Anmeldung eines Administrators zum Netzwerk 10 zur Administration eines Servers 30 erfolgt im dargestellten Ausführungsbeispiel wie folgt:

Zunächst authentifiziert UACREQ sich ein Administrator in an sich bekannter Weise gegenüber dem Netzwerk 10. Dazu übermittelt er mittels seines Administrator-Kontos eine eindeutige Kennung an das Netzwerk 10. Der Rechte-Management-Server 60 prüft anhand der der Kennung zugeordneten Administratorsignatur, ob der Administrator über ein Administratorzertifikat verfügt. Ist dies der Fall, so wird anhand der Administratorsignatur ein Administrator-Konto ermittelt und das diesem Administrator-Konto zugeordnete Score-Konto identifiziert. Der im Score-Konto buchgehaltene Score-Wert wird auf ein Überschreiten des ersten Schwellwerts geprüft. Liegt der Score-Wert unterhalb des ersten Schwellwerts, so wird die Anmeldung des Administrators zum Netzwerk 10 fortgesetzt. Liegt der Score-Wert oberhalb des ersten Schwellwerts, so wird der Administrator vom Netzwerk 10 abgewiesen.

Im weiteren Verlauf wählt der Administrator einen Server 30, auf welchem die Projekt-Koordinations-Software abläuft und welchen er administriert. Der Server 30 prüft, ob der Administrator zur Administration des Servers 30 zuvor registriert UREGSYS worden ist. Wenn dies nicht der Fall ist, wird der Administrator von dem Server 30 abgelehnt. Ist der Adminstrator zur Administration des Servers 30 registriert, so wird die Anmeldung des Administrators fortgesetzt.

Abschließend prüft der Rechte-Management-Server 60 anhand der Serversignatur des Servers 30, ob er aktuell der System-Sollkonfiguration SYSOPC genügt. Ist das der Fall, so erhält der Administrator die Erlaubnis OPALL, den Server 30 zu administrieren. Genügt der Server 30 hingegen aktuell nicht der System-Sollkonfiguration SYSOPC, so wird die Serverzulassung ISLP widerrufen.

Im dargestellten Ausführungsbeispiel werden die Serverzulassung ISLP des Servers 30 sowie das Administratorzertifikat ISDL zur Administrierung des Servers 30 nicht lediglich zur erstmaligen Zulassung der Administratoren und Server 30 zum Netzwerk 10 validiert. Vielmehr wird die Aufrechterhaltung des Administratorzertifikats ISDL vom Score-Wert des Score-Konto des zum Administrator gehörigen Administrator-Kontos abhängig gemacht und die Serverzulassung ISLP wird vom Score-Wert des Score-Kontos des Servers 30 abhängig gemacht. So prüft die Beobachtungseinheit 70 in regelmäßigen Abständen oder kontinuierlich den Update-Zustand der Betriebssysteme der Server 30 weiter. Überschreitet der Score-Wert des Score-Kontos des zum Administrator gehörigen Administrator-Kontos den ersten Schwellwert, so wird der Administrator durch den Rechte-Management-Server 60 von der weiteren Administrierung des Servers 30 ausgeschlossen. Ferner wird auch der Server 30 von dem Netzwerk 10 getrennt. In weiteren, nicht eigens dargestellten Ausführungsbeispielen wird der Administrator nicht von der weiteren Administrierung des Servers 30 ausgeschlossen, sondern es wird eine entsprechende Nachricht an einen Sicherheitsbeauftragten des Netzwerks 10 übersandt, die auf die entsprechende Überschreitung des ersten Schwellwertes hinweist. Ferner wird der Server 30 nicht vom Netzwerk 10 getrennt, sondern es wird eine Nachricht an den Sicherheitsbeauftragten des Netzwerks 10 übersandt, sodass dieser den Umstand näher prüfen kann.

Überschreitet ein Administrator eines Servers 30 des Netzwerks 10 das ihm zugeordnete Score-Konto, so kann ihm durch den Rechte-Management-Server 60 ein Training auferlegt werden, nach dessen Durchführung ihm das Administratorzertifikat ISDL wieder zuerkannt wird. Insbesondere kann der Score-Wert in mehreren Dimensionen, etwa jeweils bezogen auf die von ihm konfigurierte Software des Servers 30, hier etwa zum einen der Projekt-Koordinations-Software und eines Betriebssystems des Servers 30, ermittelt werden. Wird beim Überschreiten des ersten Schwellwertes des Score-Wertes des dem Administrator mittels des Administrator-Kontos zugeordneten Score-Kontos festgestellt, dass die Überschreitung zum größten Teil auf eine mangelhafte Aktualisierung des Betriebssystems des Servers 30 zurückzuführen ist, so kann das Training automatisiert eine höhere Gewichtung von auf das Betriebssystem des Servers 30 bezogenen Inhalten vorsehen. Dazu werden die Score-Werte zweckmäßig in denjenigen Dimensionen, d.h. Kategorien, erfasst, zu welchen modularisiert Trainingsinhalte zur Verfügung stehen. Im dargestellten Ausführungsbeispiel liegen die Trainingsinhalte modularisiert in 5 bis 10 Kategorien vor, welche etwa dann in ein Training für die Administratoren aufgenommen werden, wenn die Kategorien bei Überschreiten des Score-Wertes mit Einträgen belegt sind. Diejenigen Kategorien, denen kein von Null verschiedener Score-Wert zugeordnet ist, bleiben bei einer Gewichtung des Trainings entweder gänzlich unberücksichtigt oder werden mit einem Standard-Inhalt berücksichtigt, welcher sich von einem Nachschulungsinhalt unterscheidet, welches dann in das Training für den Administrator aufgenommen wird, wenn die Kategorie mit einem von Null verschiedenen Score-Wert belegt ist. Im dargestellten Ausführungsbeispiel werden die Module des Trainings automatisiert mittels einer Software des Rechte-Management-Servers 60 zusammengestellt.

## Patentansprüche

1. Verfahren zum Betreiben eines Netzwerks (10) mit mindestens einem mindestens eine Netzwerkressource (30) administrierenden Endpunkt (50), aufweisend die Schritte
- Festlegen eines Regelsatzes mit mindestens einer Regel für den zumindest einen Endpunkt (50),
- Beobachten einer Compliance des zumindest einen Endpunkts (50) mit dem Regelsatz,
- Zuweisen eines Scores abhängig von der Compliance und
- Bestimmung mindestens einer Maßnahme abhängig von dem Score,
- **dadurch gekennzeichnet, dass** der Endpunkt (50) eine Administratorschnittstelle bildet und
- wobei der Regelsatz mit der mindestens einen Regel ein Regelsatz für ein Administrieren der mindestens einen Netzwerkressource (30) durch den mindestens einen Endpunkt (50) ist und
- die mindestens eine Netzwerkressource (30) jeweils physisch getrennt von dem mindestens einen diese Netzwerkressource administrierenden Endpunkt (50) vorliegt und
- auf die Netzwerkressource (30) nicht allein der mindestens eine diese Netzwerkressource (30) administrierende Endpunkt (50) zugreifen kann, sondern ein oder mehrere weitere Endpunkte des Netzwerks zugreifen können, und wobei
- die mindestens eine Netzwerkressource (30) mit einer Hardware, insbesondere einem Server, und/oder mit einer Software, insbesondere einem Betriebssystem und/oder einem Anwendungsprogramm zur Anwendung mittels des Netzwerks (10), gebildet wird und
- der Regelsatz die Regelmäßigkeit und/oder Rechtzeitigkeit eines Updates der Software und/oder einer Software auf der Hardware festlegt und
- der Score abhängig von einem Zeitraum, über welchen mindestens ein Update versäumt wird, und/oder abhängig von einer Anzahl und/oder einer Kritikalität bezüglich der IT-Sicherheit versäumter Updates ist.

2. Verfahren nach dem vorhergehenden Anspruch, bei welchem die mindestens eine Maßnahme ein Begrenzen von Privilegien des Endpunkts (50) im Netzwerk (10) abhängig von dem Score umfasst.

3. Verfahren nach Anspruch 2, bei welchem das Begrenzen der Privilegien ein Begrenzen der Privilegien für das Administrieren der Netzwerkressource (30) ist.

4. Verfahren nach einem der vorhergehenden Ansprüche, bei welchem die mindestens eine Maßnahme einen Abbruch des Betreibens des Netzwerks (10) umfasst.

5. Verfahren nach einem der vorhergehenden Ansprüche, bei welchem der mindestens eine Endpunkt (50) mit je mindestens einer Netzwerkressource (30) und/oder mindestens einer Administrator-Hardware, vorzugsweise ein Client-Rechner und/oder eine Authentifizierungs-Hardware, und/oder mindestens einer Hardware-Schnittstelle, vorzugsweise einem User-Account, gebildet wird.

6. Verfahren nach einem der vorhergehenden Ansprüche, bei welchem die Maßnahme eine Änderung oder Begrenzung von administrativen Privilegien umfasst.

7. Verfahren nach einem der vorhergehenden Ansprüche, bei welchem die Maßnahme eine Anbindung oder Änderung der Anbindung des Endpunkts (50) an das Netzwerk (10) umfasst.

8. Verfahren nach einem der vorhergehenden Ansprüche, bei welchem die Maßnahme eine Schulung für einen sich mit dem Endpunkt (50) verbindenden Administrator beinhaltet.

9. Verfahren nach einem der vorhergehenden Ansprüche, bei welchem der Score in mindestens zwei Kategorien zugewiesen wird und die Schulung, vorzugsweise mittels Modulen, abhängig von dem Score in den Kategorien, angepasst wird, vorzugsweise von der Besetzung der Kategorien und/oder dem absoluten und/oder relativen Gewicht der Kategorien und/oder bei welchem ein Administrator zum Netzwerk (10) erst nach einer Schulung zugelassen wird.

10. Verfahren nach einem der vorhergehenden Ansprüche, bei welchem der Score abhängig von einer, vorzugsweise wiederholten, Schulung und/oder einer, vorzugsweise wiederholten, Überprüfung vergeben oder aufrechterhalten oder geändert wird.

11. Computerprogrammprodukt, ausgebildet zur Ausführung des Verfahrens nach einem der vorhergehenden Ansprüche, ferner ausgebildet zur Speicherung eines Regelsatzes mit mindestens einer Regel für den zumindest einen Endpunkt (50), zur Entgegennahme von Beobachtungsdaten zur Compliance des zumindest einen Endpunkts (50) mit dem Regelsatz sowie zur Zuweisung eines Scores abhängig von der Compliance.

## Claims

1. Method for operating a network (10) having at least one endpoint (50) which administers at least one network resource (30), comprising the following steps:
- defining a rule set having at least one rule for the at least one endpoint (50),
- monitoring compliance of the at least one endpoint (50) with the rule set,
- allocating a score depending on the compliance, and
- determining at least one measure depending on the score,
- **characterized in that** the endpoint (50) forms an administrator interface, and
- wherein the rule set having the at least one rule is a rule set for administration of the at least one network resource (30) by the at least one endpoint (50), and
- the at least one network resource (30) is present in each case in a manner physically separated from the at least one endpoint (50) which administers this network resource, and
- the network resource (30) can not just be accessed by the at least one endpoint (50) which administers this network resource (30), but rather can be accessed by one or more further endpoints of the network, and wherein
- the at least one network resource (30) is formed with hardware, in particular a server, and/or with software, in particular an operating system and/or an application program for application by means of the network (10), and
- the rule set defines the regularity and/or timeliness of an update of the software and/or of software on the hardware, and
- the score is dependent on a period of time over which at least one update is missed, and/or dependent on a number and/or a criticality regarding IT security of missed updates.

2. Method according to the preceding claim, wherein the at least one measure comprises limiting privileges of the endpoint (50) in the network (10) depending on the score.

3. Method according to Claim 2, wherein limiting the privileges is limiting the privileges for administering the network resource (30).

4. Method according to any of the preceding claims, wherein the at least one measure comprises a termination of the operation of the network (10).

5. Method according to any of the preceding claims, wherein the at least one endpoint (50) is formed with in each case at least one network resource (30) and/or at least one item of administrator hardware, preferably a client computer and/or authentication hardware, and/or at least one hardware interface, preferably a user account.

6. Method according to any of the preceding claims, wherein the measure comprises a change or limitation of administrative privileges.

7. Method according to any of the preceding claims, wherein the measure comprises a linking or change of the linking of the endpoint (50) to the network (10).

8. Method according to any of the preceding claims, wherein the measure comprises training for an administrator connecting to the endpoint (50).

9. Method according to any of the preceding claims, wherein the score is allocated in at least two categories and the training, preferably by means of modules, is adapted depending on the score in the categories, preferably on the occupancy of the categories and/or the absolute and/or relative weight of the categories, and/or wherein an administrator is authorized with respect to the network (10) only after training.

10. Method according to any of the preceding claims, wherein the score is assigned or maintained or changed depending on training, preferably repeated training, and/or checking, preferably repeated checking.

11. Computer program product, designed for carrying out the method according to any of the preceding claims, furthermore designed for storing a rule set having at least one rule for the at least one endpoint (50), for receiving monitoring data concerning the compliance of the at least one endpoint (50) with the rule set, and for allocating a score depending on the compliance.

## Revendications

1. Procédé destiné à l'exploitation d'un réseau (10) avec au moins un point final (50) administrant au moins une ressource de réseau (30), présentant les étapes suivantes :
- définition d'un jeu de règles avec au moins une règle pour l'au moins un point final (50),
- observation d'une conformité de l'au moins un point final (50) avec le jeu de règles,
- attribution d'un score en fonction de la conformité et
- détermination d'au moins une mesure en fonction du score,
- **caractérisé en ce que** le point final (50) forme une interface administrateur et
- dans lequel le jeu de règles avec l'au moins une règle est un jeu de règles pour une administration de l'au moins une ressource de réseau (30) par le biais de l'au moins un point final (50) et
- l'au moins une ressource de réseau (30) est disponible respectivement séparée physiquement de l'au moins un point final (50) administrant cette ressource de réseau et
- l'au moins un point final (50) administrant cette ressource de réseau (30) ne peut pas accéder seul à la ressource de réseau (30), mais un ou plusieurs autres points finaux du réseau peuvent y accéder, et dans lequel
- l'au moins une ressource de réseau (30) est formée avec un matériel, en particulier un serveur, et/ou avec un logiciel, en particulier un système d'exploitation et/ou un programme d'application destinés à être appliqués au moyen du réseau (10) et
- le jeu de règles définit la régularité et/ou la rapidité d'une mise à jour des logiciels et/ou d'un logiciel sur le matériel et
- le score est en fonction d'une période pendant laquelle au moins une mise à jour est omise, et/ou en fonction d'une quantité et/ou d'une criticité en ce qui concerne la sécurité informatique de la mise à jour omise.

2. Procédé selon la revendication précédente, dans lequel l'au moins une mesure comprend une limitation de privilèges du point final (50) dans le réseau (10) en fonction du score.

3. Procédé selon la revendication 2, dans lequel la limitation des privilèges est une limitation des privilèges pour l'administration de la ressource de réseau (30).

4. Procédé selon l'une quelconque des revendications précédentes, dans lequel l'au moins une mesure comprend une interruption de l'exploitation du réseau (10).

5. Procédé selon l'une quelconque des revendications précédentes, dans lequel l'au moins un point final (50) est formé avec respectivement au moins une ressource de réseau (30) et/ou au moins un matériel d'administrateur, de préférence un ordinateur client et/ou un matériel d'authentification, et/ou au moins une interface matérielle, de préférence un compte utilisateur.

6. Procédé selon l'une quelconque des revendications précédentes, dans lequel la mesure comprend une modification ou une limitation de privilèges administratifs.

7. Procédé selon l'une quelconque des revendications précédentes, dans lequel la mesure comprend une connexion ou une modification de la connexion du point final (50) au réseau (10).

8. Procédé selon l'une quelconque des revendications précédentes, dans lequel la mesure contient une formation pour un administrateur se reliant au point final (50).

9. Procédé selon l'une quelconque des revendications précédentes, dans lequel le score est attribué dans au moins deux catégories et la formation, de préférence au moyen de modules, est adaptée en fonction du score dans les catégories, de préférence par l'occupation des catégories et/ou du poids absolu et/ou relatif des catégories et/ou dans lequel un administrateur est autorisé à entrer dans le réseau (10) uniquement après une formation.

10. Procédé selon l'une quelconque des revendications précédentes, dans lequel le score est attribué ou maintenu ou modifié en fonction d'une formation, de préférence répétée, et/ou d'une vérification, de préférence répétée.

11. Produit de programme informatique, configuré pour la mise en œuvre du procédé selon l'une quelconque des revendications précédentes, configuré en outre pour la mise en mémoire d'un jeu de règles avec au moins une règle pour l'au moins un point final (50), pour l'acceptation de données d'observation destinées à la conformité de l'au moins un point final (50) avec le jeu de règles ainsi que pour l'attribution d'un score en fonction de la conformité.
